# EUROPEAN PATENT SPECIFICATION

(11) **EP 3 237 844 B1**
(45) Date of publication and mention of the grant of the patent: **19.08.2020**
(21) Application number: 14837015.8
(22) Date of filing: 26.12.2014
(51) Int. Cl.: G01C 19/5726, G01C 19/5776

(54) **METHOD FOR SUPPRESION OF G-SENSITIVITY OF MEMS GYROSCOPE**
VERFAHREN ZUR SUPPRESSION DER G-EMPFINDLICHKEIT EINES MEMS-KREISELS
PROCÉDÉ DE SUPPRESSION DE LA SENSIBILITÉ À L'ACCÉLÉRATION LINÉAIRE D'UN GYROSCOPE MEMS

(43) Date of publication of application: 01.11.2017
(73) Proprietor: Azgin, Kivanc, 06800 Cankaya/Ankara (TR); Gavcar, Hasan Dogan, 06800 Cankaya/Ankara (TR); Akin, Tayfun, 06800 Cankaya/Ankara (TR)
(72) Inventor: Azgin, Kivanc, 06800 Cankaya/Ankara (TR); Gavcar, Hasan Dogan, 06800 Cankaya/Ankara (TR); Akin, Tayfun, 06800 Cankaya/Ankara (TR)
(74) Representative: Kayahan, Senem
(86) International application number: PCT/TR2014/000545
(87) International publication number: WO 2016/105287

(56) References cited:
- WO-A1-02/01231
- US-A1- 2001 037 682
- US-A1- 2012 216 612
- AZGIN K ET AL: "A Novel In-Operation High g-Survivable MEMS Gyroscope", SENSORS, 2007 IEEE, IEEE, PI, 28 October 2007 (2007-10-28), pages 111-114, XP031221008, ISBN: 978-1-4244-1261-7

## Description

### Related Field of the Invention

The invention relates to providing a method for suppression of the linear-acceleration-sensitivity of MEMS gyroscope by keeping the movable sense frame of the gyroscope quasi-stationary, irrespective to the external accelerations with the aid of closed-loop feedback circuit.

### Background of the Invention (Prior Art)

The adaptation of the IC processing technology for creating controllable, mechanical and movable microstructures in the past few decades has made the major contribution to the evolution of today's high-technology systems. The rapid growth of the micromachining technologies has generated various kinds of developments in many diverse fields, ranging from consumer products to communication, from inertial navigation systems to medicine and bioengineering. In today's technology, many of the MEMS sensors have presented better performances than their macro scale counterparts. Similarly, MEMS gyroscopes are expected to take the place of the ring laser and fiber optic gyroscopes in many applications because of their high reliability, promising performance, small size, and low cost in the near future [1]. MEMS gyroscopes are widely used in automotive roll-over prevention, airbag systems, image stabilization, and they have many other potential applications.

The operation of the MEMS vibratory gyroscopes relies on the Coriolis coupling, which enables the transfer of the energy from the drive to sense mode in the presence of an angular rotation. With the advance development in the gyroscope performance characteristics including the bias instability, resolution and bandwidth, the environmental effects such as vibration and acceleration acting on the gyroscope have a prominent impact on the reliability and robustness of the gyroscope [2], [3]. Considering the application areas of high performance MEMS inertial sensors, these sensors are usually exposed to various vibrations and acceleration during the operation. These effects causes an output error, namely 'acceleration sensitivity' or 'acceleration output'.

In everyday and field applications, the outputs of all MEMS gyroscopes are affected by external accelerations, partly due to their design and partly due to the fabrication imperfections. The effect of acceleration on the gyroscope output can be seen in the different forms, the most significant ones are usually sensitivity to linear acceleration (or g sensitivity) and vibration rectification (or g² sensitivity). Since most of the gyroscopes are subjected to the Earth's 1 g field of gravity in the application, the sensitivity acceleration exhibits one of the largest error sources [4].

The high frequency acceleration or vibration outputs are difficult to predict and very hard to compensate using electronics; thus, the compensation of the vibration rectification error is usually done by improving the mechanical design of gyroscope rather than the control electronics. A common method to reduce the effect of the external acceleration or vibration is to use the tuning-fork type vibrating gyroscopes (TFG) which are believed to be insensitive to the common mode signals such as linear acceleration because these signals are mitigated by the differential reading of the sense mode signals coming from the two differentially-connected masses [5], [2], [6], [7]. However, it has been found that tuning fork type gyroscopes could still experience an output error caused by applying the linear acceleration along the sense axis to the gyros [8].

Implementing a micro-mechanical shock absorber under the sensor structure is another method to eliminate the effect of random high-frequency accelerations or vibrations [9]. Although this method provides a solution for the vibration sensitivity of a gyroscope, it does not eliminate the effects of static or low frequency accelerations.

Acceleration sensitivity of the gyroscope can also be improved by calibrating the gyroscope output with the aid of an additional external accelerometer; however, the amount of the measured acceleration cannot always be the acceleration sensed by the gyroscope due to the difference in the physical locations of both sensors [4].

Quadruple mass gyroscope design is also implemented to make the sensor immune to the external shock and vibration [10]. However, it is hard to realize a higher performance due to the complex structure of four-mass gyroscopes.

The document "A Novel In-Operation High g-Survivable MEMS Gyroscope" by Azgin K. et al. in SENSORS, 2007 IEEE, 28 October 2007, pages 111-114, (ISBN: 978-1-4244-1261-7) describes a shock- and acceleration-resistant MEMS gyroscope structure and read-out electronics.

The document WO 02/01231 A1 describes a MEMS gyroscope with reduced sensitivity to external acceleration that generates a counterbalancing force according to dynamic compensation parameters that are determined during initial sensor calibration.

### Brief Description of the Invention:

The present invention provides a method for suppression of the g-sensitivity of MEMS gyroscope by keeping the movable sense frame of the gyroscope stationary irrespective to the external accelerations with the aid of closed-loop feedback circuit. The proposed methods utilize the amplitude difference of sustained residual quadrature signals exist on the differential sense mode electrodes to detect the static acceleration acting on the sense axis of the gyroscope. Accordingly, a MEMS gyroscope as set forth in claim 1 is provided.

In the absence of the external acceleration, the average gap spacing of the positive and negative sense mode electrodes are equal, resulting in the out of phase quadrature signals with the same amplitudes. However, when the net force resulting from an applied quasi-static acceleration on the movable sense frame is different than zero, the capacitive gap between the differential sense-mode electrodes decreases on one side and increases on the other. This shift causes a variation at the amplitudes of the quadrature signals on the differential sense-mode electrodes, i.e., the amplitude of the quadrature signal increases (or decreases) with a decreasing (or increasing) capacitive gap under the condition of an applied static acceleration condition compared to the case when there is no acceleration. As a result, the sum of the positive and negative AC quadrature signals gives nonzero output showing that an external acceleration act on the sense axis of the gyroscope.

### Definition of the Figures

In order to explain the present invention in more detail, the following figures have been prepared and attached to the description. The list and the definition of the figures are given below.
**FIGURE 1** shows a MEMS gyroscope with a closed-loop acceleration cancellation control circuit according to an embodiment of the invention.
**FIGURE 2** shows a MEMS gyroscope with a closed-loop acceleration cancellation control circuit according to an example not forming part of the claimed invention.
**FIGURE 3** shows a MEMS gyroscope with a closed-loop acceleration cancellation control circuit and dedicated acceleration cancellation electrode pairs according to an example not forming part of the claimed invention.
**FIGURE 4A** shows a movable sense of a MEMS gyroscope in the absence of a static acceleration
**FIGURE 4B** shows a movable sense frame (5) of a MEMS gyroscope (1) under a static acceleration.

### Definition of the Elements (Features/Components/Parts) on the Figures

The definition of the features/components/parts that are covered in the figures that are prepared in order to explain the present invention better are separately numbered and given below.
- 1.: MEMS gyroscope
- 2.: Acceleration cancellation circuit
- 3.: Drive mode actuation electrodes
- 4.: Drive mode sensing electrodes
- 5.: Movable sense mode frame
- 6.: Positive sense mode electrodes
- 7.: Negative sense mode electrodes
- 8.: Positive force-feedback electrode
- 9.: Negative force-feedback electrode
- 10.: Positive sense mode channel output signal
- 11.: Negative sense mode channel output signal
- 12.: Preamplifier of positive sense mode channel output
- 13.: Preamplifier of negative sense mode channel output
- 14.: Summing amplifier
- 15.: Demodulator
- 16.: Drive mode channel output signal
- 17.: Low pass filter
- 18.: Controller
- 19.: Buffer
- 20.: Inverting Amplifier
- 21.: Positive feedback voltage
- 22.: Negative feedback voltage
- 23.: Positive acceleration cancellation electrode
- 24.: Negative acceleration cancellation electrode
- 25.: Average capacitive gap positive sense mode electrodes
- 26.: Average capacitive gap negative sense mode electrodes
- 27.: Nonzero static acceleration

### Detailed Description of the Invention

The present invention aims to improve the static acceleration sensitivity of MEMS gyroscopes (1) with aid of a closed-loop feedback circuit (2), without requiring any complex change in the mechanical structure of the gyroscope (1).

The invention is based on the acceleration cancellation circuit (2). The function of the proposed circuit (2) is to generate a feedback voltage (21, 22) applied to the positive force-feedback electrode (8) and negative force-feedback electrode (9) located on the sense frame to stop the motion of the movable sense frame caused by the static acceleration.

### Method-1

In this method, the acceleration force acting on the sense axis is balanced by generating a DC force on the sense mode electrodes (6, 7). Normally, the function of the sense mode electrodes (6, 7) is to convert the sense mode displacement to the output current. In other words, these electrodes (6, 7) are used to detect the sense mode output current. However, in this method, the sense mode electrodes (6, 7) are used for both sensing and actuation purposes. This method does not require any change in the mechanical structure of the MEMS gyroscope (1).

The static acceleration acting on the movable sense frame is sensed by comparing the amplitudes of the out of phase quadrature signals generated on the differential sense mode electrodes (6, 7) using a summing amplifier (14). The output of the summing amplifier (14) is demodulated with the drive mode channel output signal (16). The output of the demodulator passes through a low pass filter (17), and the output of the low pass filter (17) is fed to the controller op-amp (18). The controller op-amp (18) generates a DC voltage proportional with the amplitude of the static acceleration. The feedback voltages (21, 22) are connected to the non-inverting inputs of the sense mode preamplifiers (12, 13) differentially. Any voltage change in the non-inverting inputs of the sense mode preamplifiers (12, 13) alters the DC voltages on the differential sense mode electrodes (6, 7). If the DC voltages on the differential sense mode electrodes (6, 7) are not equal, a DC force is generated on the movable sense frame in the opposite direction of the static acceleration force. As a result, the movable sense frame is kept stationary under an external acceleration, suppressing the g-sensitivity of the gyroscope bias.

### Method-2

In this method not forming part of the claimed invention, the acceleration force acting on the sense axis is balanced by generating a DC force on the force-feedback electrodes (8, 9). Normally, the function of the force-feedback electrodes (8, 9) is to stop the movement of the proof mass caused by Coriolis force. However, in this method, the force-feedback electrodes (8, 9) are used to generate both AC force at the drive frequency and DC voltage. This method does not require any change in the mechanical structure of the MEMS gyroscope (1).

The static acceleration acting on the movable sense frame is sensed by comparing the amplitudes of the out of phase quadrature signals generated on the differential sense mode electrodes (6, 7) using a summing amplifier (14). The output of the summing amplifier (14) is demodulated with the drive mode output signal (16). The output of the demodulator (15) passes through a low pass filter (17), and the output of the low pass filter (17) is fed to the controller op-amp. The controller op-amp (18) generates a DC voltage proportional with the amplitude of the static acceleration. The feedback voltages (21, 22) are fed to the force-feedback electrodes (8, 9) differentially. If the DC voltages on the differential force feedback electrodes (8, 9) are not equal, a DC force is generated on the movable sense mode frame (5) in the opposite direction of the static acceleration force. As a result, the movable sense frame (5) is kept stationary under an external acceleration, suppressing the g-sensitivity of the gyroscope bias.

### Method-3

In this method not forming part of the claimed invention, the acceleration force acting on the sense axis is balanced by generating a DC force on the dedicated acceleration cancellation electrodes (23, 24). The function of these electrodes (23, 24) is to generate DC force on the movable sense frame (5) in the opposite direction of the static acceleration force. This method requires a small change in the mechanical structure of the MEMS gyroscope (1).

The static acceleration acting on the movable sense frame (5) is sensed by comparing the amplitudes of the out of phase quadrature signals generated on the differential sense mode electrodes (6, 7) using a summing amplifier (14). The output of the summing amplifier (14) is demodulated with the drive mode output signal (10, 11). The output of the demodulator passes through a low pass filter (17), and the output of the low pass filter (17) is fed to the controller op-amp (18). The controller op-amp (18) generates a DC voltage proportional with the amplitude of the static acceleration. The feedback voltages (21, 22) are fed to the differential acceleration cancellation electrodes (23, 24). If the DC voltages on the differential acceleration cancellation electrodes (23, 24) are not equal, a DC force is generated on the movable sense mode frame (5) in the opposite direction of the static acceleration force. As a result, the movable sense frame (5) is kept stationary under an external acceleration, suppressing the g-sensitivity of the gyroscope bias.

The explanations of the figures for present invention are given below;

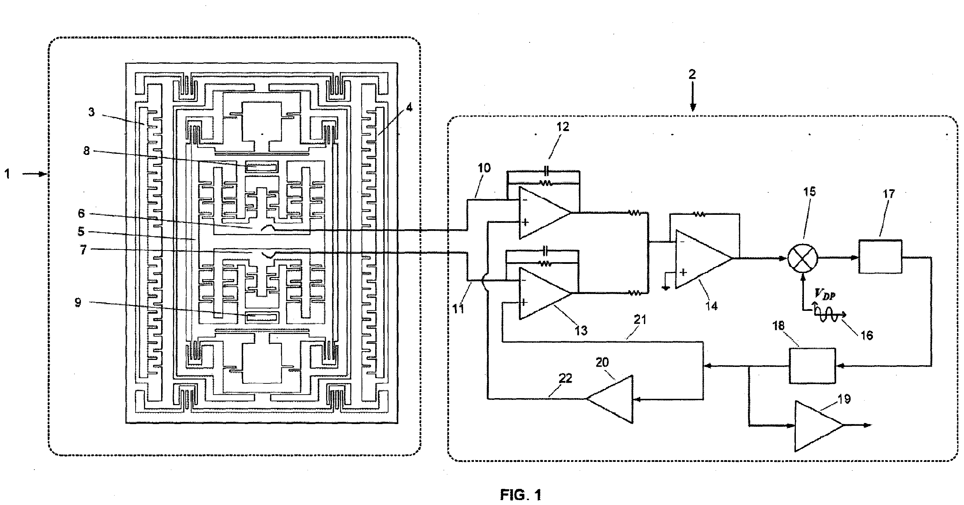

**Figure 1** shows a MEMS gyroscope (1) with a closed-loop acceleration cancellation control circuit (2) applying feedback voltage (21, 22) to the sense mode electrodes (6, 7). The MEMS gyroscope (1) includes drive actuation electrodes (3), drive sensing electrodes (4), movable sense mode frame (5), positive sense mode electrodes (6), negative sense mode electrodes (7), positive force-feedback electrode (8) and negative force-feedback electrode (9). The closed-loop acceleration cancellation circuit (2) is composed of sense mode preamplifier (12) for positive sense mode channel output signal (10), sense mode preamplifier (13) for negative sense mode channel output signal (11), summing amplifier (14), demodulator (15), low-pass filter (17), controller stage (18), buffer amplifier (19), inverting amplifier (20). In the MEMS gyroscope (1), the positive sense mode electrodes (6) generate quadrature based positive sense mode channel output signal (10), and the negative sense mode electrodes (7) generate quadrature based negative sense mode channel output signal (11). The positive sense mode channel output signal (10) is converted to the positive sense mode channel output voltage via the preamplifier stage (12). Similarly, the negative sense mode channel output' signal (11) is converted to the negative sense mode channel output voltage via the preamplifier stage (13). A summing amplifier (14) sums the out of phase quadrature signals. The output of the summing amplifier (14) is modulated with the drive mode channel output signal (16) at a demodulator (15). The output of the demodulator (15) passes through a low pass filter (17). The output of the low pass filter (17) gives a measure of the static acceleration acting on movable sense frame (5). The output of the low pass filter (17) is fed to the controller stage (18). The controller stage (18) generates a feedback voltage (21) to keep the movable sense frame (5) of the MEMS gyroscope (1) stationary irrespective to the external acceleration. The generated feedback voltage (21) depends on the amplitude of the static acceleration acting on the movable sense frame (5) of the MEMS gyroscope (1). The feedback voltage (21) is inverted using an inverting amplifier (20). The feedback voltage (21) is connected to the non-inverting input of the sense mode preamplifier (11). The inverted feedback voltage (22) is connected to the non-inverting input of the sense mode preamplifier (12). The voltage change in the non-inverting inputs of the sense mode preamplifiers (12, 13) alters DC voltage on the positive sense mode electrodes (6) and negative sense mode electrodes (7). If DC voltages the positive sense mode electrodes (6) and negative sense mode electrodes (7) are different, a nonzero DC force is generated on the movable sense frame (5) in the opposite direction of the static acceleration force. The generated DC force compensates the effect of the static acceleration on the movable sense frame (5). The output (21) of the controller stage (18) also passes through a buffer (19). The output of the buffer (19) gives information about the amplitude of the acceleration.

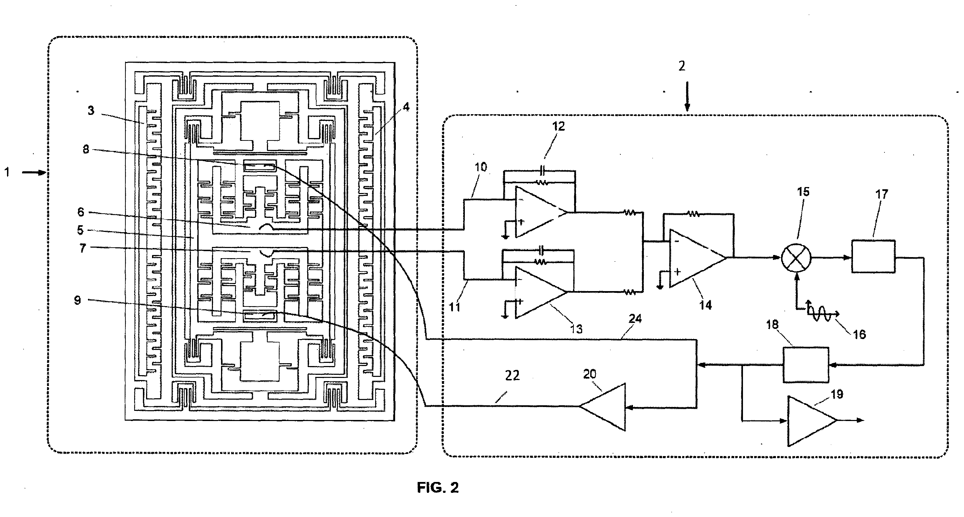

**Figure 2** shows a MEMS gyroscope (1) with a closed-loop acceleration cancellation control circuit (2) applying feedback voltage (21, 22) to force-feedback electrodes (6, 7). The MEMS gyroscope (1) includes drive actuation electrodes (3), drive sensing electrodes (4), movable sense mode frame (5), positive sense mode electrodes (6), negative sense mode electrodes (7), positive force-feedback electrode (8) and negative force-feedback electrode (9). The closed-loop acceleration cancellation circuit (2) is composed of sense mode preamplifier (12) for positive sense mode channel output signal (10), sense mode preamplifier (13) for negative sense mode channel output signal (11), summing amplifier (14), demodulator (15), low-pass filter (17), controller stage (18), buffer amplifier (19), inverting amplifier (20). In the MEMS gyroscope (1), the positive sense mode electrodes (6) generate quadrature based positive sense mode channel output signal (10), and the negative sense mode electrodes (7) generate quadrature based negative sense mode channel output signal (11). The positive sense mode channel output signal (10) is converted to the positive sense mode channel output voltage via the preamplifier stage (12). Similarly, the negative sense mode channel output current (11) is converted to the negative sense mode channel output voltage via the preamplifier stage (13). A summing amplifier (14) sums the out of phase quadrature signals. The output of the summing amplifier (14) is modulated with the drive mode channel output signal (16) at a demodulator (15). The output of the demodulator (15) passes through a low pass filter (17). The output of the low pass filter (17) gives a measure of the static acceleration acting on movable sense frame (5). The output of the low pass filter (17) is fed to the controller stage (18). The controller stage (18) generates a feedback voltage (21) to keep the movable sense frame (5) of the MEMS gyroscope (1) stationary irrespective to the external acceleration. The generated feedback voltage (21) depends on the amplitude of the static acceleration acting on the movable sense frame (5) of the MEMS gyroscope (1). The feedback voltage (21) is inverted using an inverting amplifier (20). The feedback voltage (21) is connected to positive force-feedback electrode (21). The inverted feedback voltage (22) is connected to the negative force-feedback electrode (9). If DC voltages on the positive force-feedback electrode (8) and negative force-feedback electrode (9) are different, a nonzero DC force is generated on the movable sense frame (5) in the opposite direction of the static acceleration force. The generated DC force compensates the effect of the static acceleration on the movable sense frame (5). The output of the controller stage (18) also passes through a buffer (19). The output of the buffer (19) gives information about the amplitude of the acceleration.

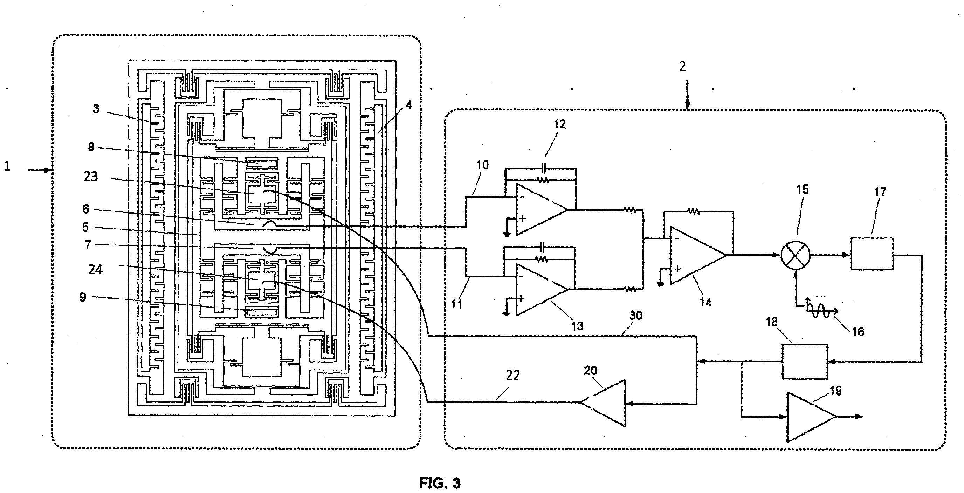

**Figure 3** shows a MEMS gyroscope (1) with a closed-loop acceleration cancellation control circuit (2) applying feedback voltage to force-feedback electrodes (8, 9). The MEMS gyroscope (1) includes drive actuation electrodes (3), drive sensing electrodes (4), movable sense mode frame (5), positive sense mode electrodes (6), negative sense mode electrodes (7), positive force-feedback electrode (8), negative force-feedback electrode (9), positive acceleration cancellation electrode (23), and negative acceleration cancellation electrode (24). The closed-loop acceleration cancellation circuit (2) is composed of sense mode preamplifier (12) for positive sense mode channel output signal (10), sense mode preamplifier (13) for negative sense mode channel output signal (11), summing amplifier (14), demodulator (15), low-pass filter (17), controller stage (18), buffer amplifier (19), inverting amplifier (20). In the MEMS gyroscope (1), the positive sense mode electrodes (6) generate quadrature based positive sense mode channel output current (10), and the negative sense mode electrodes (7) generate quadrature based negative sense mode channel output current (11). The positive sense mode channel output current (10) is converted to the positive sense mode channel output voltage via the preamplifier stage (12). Similarly, the negative sense mode channel output current (10) is converted to the negative sense mode channel output voltage via the preamplifier stage (13). A summing amplifier (14) sums the out of phase quadrature signals. The output of the summing amplifier is modulated with the drive mode channel output signal (16) at a demodulator (15). The output of the demodulator (15) passes through a low pass filter (17). The output of the low pass filter (17) gives a measure of the static acceleration acting on movable sense frame (5). The output of the low pass filter (17) is fed to the controller stage (18). The controller stage (18) generates a feedback voltage (21) to keep the movable sense frame (5) of the MEMS gyroscope (1) stationary irrespective to the external acceleration. The generated feedback voltage (21) depends on the amplitude of the static acceleration acting on the movable sense frame (5) of the MEMS gyroscope (1). The feedback voltage (21) is inverted using an inverting amplifier (20). The feedback voltage (21) is connected to positive acceleration cancellation electrodes (23). The inverted feedback voltage (22) is connected to the negative acceleration cancellation electrodes (24). If DC voltages on the positive acceleration cancellation electrodes (22) and negative acceleration cancellation electrodes (24) are different, a nonzero DC force is generated on the movable sense frame (5) in the opposite direction of the static acceleration force. The generated DC force compensates the effect of the static acceleration on the movable sense frame (5). The output of the controller stage (18) also passes through a buffer (19). The output of the buffer (19) gives information about the amplitude of the acceleration.

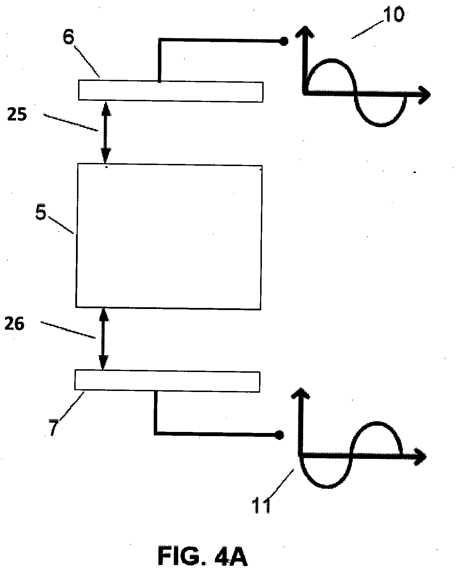

**Figure 4A** shows the movable sense frame (5) in the absence of the static acceleration. In the absence of the external acceleration, the average gap spacing (25) of positive sense mode electrodes (6) and the average gap spacing (26) of the negative sense mode electrodes (7) are equal. The positive sense mode electrodes (6) generates positive AC quadrature signal (10), and the negative sense mode electrodes (7) generates negative AC quadrature signal (11). The amplitudes of the positive AC quadrature signal (10) and negative AC quadrature signal (11) are equal when there is no acceleration.

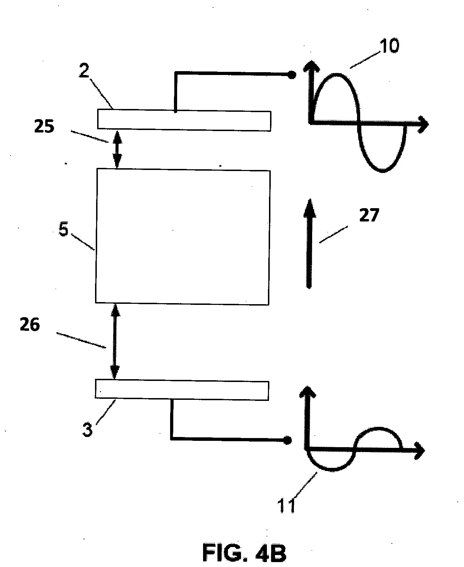

**Figure 4B** shows the movable sense frame (5) under a static acceleration (27). Under a static acceleration (27), the average gap spacing of positive sense mode electrodes (6) and the average gap spacing of the negative sense mode electrodes (7) are not equal. The positive sense mode electrodes (6) generates positive AC quadrature signal (10), and the negative sense mode electrodes (7) generates negative AC quadrature signal (11). The amplitudes of the positive AC quadrature signal (10) and negative AC quadrature signal (11) gets different under a static acceleration (27).

The implementation of the inventive system, suppression during operation with the aid of the feedback circuit of the MEMS gyroscope's (1) sensitivity to static acceleration and stopping the movement formed on the microstructure due to the acceleration feedback is obtained. Also feedback circuit can be easily applied to the MEMS gyroscope with different microstructures.

### REFERENCES

[1] S. Nasiri, M. Lim, and M. Housholder, "A Critical Review of the Market Status and Industry Challenges of Producing Consumer Grade MEMS Gyroscopes," Available online: http://invensense.com/mems/whitepapers (accessed on 5 September 2014).
[2] J. A. Geen, "Progress in Integrated Gyroscopes," Proceedings position, location, and navigation symposium (PLANS), pp.1-6, Monterey, 2004.
[3] M. F. Zaman, A. Sharma , F. Ayazi, "High Performance Matched-mode Tuning Fork Gyroscope", The 19th IEEE International Conference on Micro Electro Mechanical Systems (MEMS 2006), pp. 66-69, Istanbul, Turkey., January 2006.
[4] H. Weinberg, "Gyro Mechanical Performance: The Most Important Parameter," Tech. art., Analog Devices, Sep. 2011.
[5] H. Xie and G. K. Fedder, "Fabrication, Characterization, and Analysis of a DRIE CMOS-MEMS Gyroscope,"IEEE Sensors Journal, Vol. 3, No. 5, pp. 622-631, 2003.
[6] A. R. Schofield, A. A. Trusov, and A.M. Shkel, "Multi-degree of Freedom Tuning Fork Gyroscope Demonstrating Shock Rejection," IEEE Sensors, pp.120-123, Oct. 2007.
[7] K. Azgin, Y. Temiz, and T. Akin, "An SOI-MEMS Tuning Fork Gyroscope with Linearly Coupled Drive Mechanism," The 20th IEEE International Conference on Micro Electro Mechanical Systems (MEMS 2007), pp. 607-610, Kobe, Japan, January 21-25, 2007.
[8] S. W. Yoon, S.W. Lee, and K. Najafi, "Vibration-Induced Errors in MEMS Tuning Fork Gyroscopes," Sensor and Actuators A: Physical, Vol. 180, pp. 32-34, Jun. 2012.
[9] S. W. Yoon, "Vibration Isolation and Shock Protection for MEMS," Ph.D. Dissertation, Uni. of Michigan, 2009.
[10] Analog Devices, "ADXRS450 High Performance, Digital Output Gyroscope," Datasheet, 2011.

## Claims

1. MEMS gyroscope (1) with reduced sensitivity to linear acceleration comprising;
• drive actuation electrodes (3), drive sensing electrodes (4), movable sense mode frame (5), positive sense mode electrodes (6), negative sense mode electrodes (7), positive force-feedback electrode (8) and negative force-feedback electrode (9), wherein an external acceleration force acting on the sense axis is counterbalanced by generating a DC force on the sense mode electrodes (6, 7);
• a closed-loop acceleration cancellation circuit (2) adapted to apply feedback voltage (21, 22) to the sense mode electrodes (6,7);
• a movable sense frame (5), a summing amplifier (14) adapted to sense the static acceleration acting on said movable frame (5) by comparing the amplitudes of the out of phase quadrature signals generated on the sense mode electrodes (6,7), the output of the summing amplifier (14) being modulated with a drive mode channel output signal (16) and passed through a low pass filter (17);
• a demodulator (15) adapted to demodulate the output of the summing amplifier (14); wherein the low pass filter (17) is adapted to give a measure of the static acceleration acting on movable sense frame (5), the output of the low pass filter (17) being fed to a controller stage (18);
• wherein the controller stage (18) is adapted to generate a positive feedback voltage (21) to keep the movable sense frame (5) of the MEMS gyroscope (1) stationary irrespective of an external acceleration force;
• a buffer (19) adapted to receive the output of the controller stage (18) and to give information about the amplitude of the acceleration force; and
• an inverting amplifier (20) adapted to invert the positive feedback voltage (21) before said inverted, negative feedback voltage (22) is sent to the sense mode electrodes (6, 7).

2. MEMS gyroscope according to claim 1 where the feedback voltages (21, 22) are sent differentially to non-inverting inputs of sense mode preamplifiers (12, 13) before being sent to the sense mode electrodes (6, 7).

3. MEMS gyroscope according to claim 2 configured so that any voltage change in the non-inverting inputs of the sense mode preamplifiers (12, 13) alters the DC voltages on the differential sense mode electrodes (6, 7).

## Patentansprüche

1. MEMS-Gyroskop (1) mit verringerter Empfindlichkeit gegenüber linearer Beschleunigung, umfassend;
• Antriebsbetätigungselektroden (3), Antriebserfassungselektroden (4), beweglicher Erfassungsmodusrahmen (5), positive Erfassungsmoduselektroden (6), negative Erfassungsmoduselektroden (7), positive Kraft-Rückkopplungselektrode (8) und negative Kraft-Rückkopplungselektrode (9), wobei eine externe Beschleunigungskraft, die auf die Erfassungsachse wirkt, durch Erzeugen einer Gleichstromkraft auf die Erfassungsmoduselektroden (6, 7) ausgeglichen wird;
• Beschleunigungsunterdrückungsschaltung mit geschlossenem Regelkreis (2), die angepasst ist, um eine Rückkopplungsspannung (21, 22) an die Erfassungsmoduselektroden (6,7) anzulegen;
• Beweglichen Erfassungsrahmen (5), ein Summierverstärker (14), die angepasst sind, um die statische Beschleunigung zu erfassen, die auf den genannten beweglichen Rahmen (5) wirkt, indem die Amplituden der phasenverschobenen Quadratursignale verglichen werden, die an den Erfassungsmoduselektroden (6, 7) erzeugt werden; der Ausgang des Summierverstärkers (14) wird mit einem Ansteuerungskanalausgangssignal (16) moduliert und durch ein Tiefpassfilter (17) geleitet;
• Demodulator (15), der angepasst ist, um den Ausgang des Summierverstärkers (14) zu demodulieren, wobei das Tiefpassfilter (17) angepasst ist, um ein Maß für die statische Beschleunigung zu geben, die auf den beweglichen Erfassungsrahmen (5) wirkt; der Ausgang des Tiefpassfilters (17) wird einer Steuerstufe (18) zugeführt;
• wobei die Steuerstufe (18) angepasst ist, um eine positive Rückkopplungsspannung (21) zu erzeugen, um den beweglichen Erfassungsrahmen (5) des MEMS-Gyroskops (1) unabhängig von einer externen Beschleunigungskraft stationär zu halten;
• Puffer (19), der angepasst ist, um die Ausgabe der Steuerstufe (18) zu empfangen und Informationen über die Amplitude der Beschleunigungskraft zu geben; und
• Invertierender Verstärker (20), der angepasst ist, um die positive Rückkopplungsspannung (21) zu invertieren, bevor die genannte invertierte negative Rückkopplungsspannung (22) an die Erfassungsmoduselektroden (6, 7) gesendet wird.

2. MEMS-Gyroskop nach Anspruch 1, wobei die Rückkopplungsspannungen (21, 22) differentiell an nichtinvertierende Eingänge von Erfassungsmodus-Vorverstärkern (12, 13) gesendet werden, bevor sie an die Erfassungsmoduselektroden (6, 7) gesendet werden.

3. MEMS-Gyroskop nach Anspruch 2, das so konfiguriert ist, dass jede Spannungsänderung in den nichtinvertierenden Eingängen der Erfassungsmodus-Vorverstärker (12, 13) die Gleichspannungen an den Differentialerfassungsmoduselektroden (6, 7) ändert.

## Revendications

1. Gyroscope MEMS (1) avec sensibilité réduite à l'accélération linéaire comprenant ;
• des électrodes d'actionnement d'entraînement (3), des électrodes de détection d'entraînement (4), un cadre du mode de détection mobile (5), des électrodes du mode de détection positive (6), des électrodes du mode de détection négative (7), une électrode de rétroaction de force positive (8) et une électrode de rétroaction de force négative (9), dans lequel une force d'accélération externe agissant sur l'axe de détection est contrebalancée par la génération d'une force en courant continue sur les électrodes du mode de détection (6, 7) ;
• un circuit d'annulation d'accélération en boucle fermée (2) adapté pour appliquer une tension de rétroaction (21, 22) aux électrodes du mode de détection (6, 7) ;
• un cadre de détection mobile (5), un amplificateur de sommation (14) adapté pour détecter l'accélération statique agissant sur ledit cadre mobile (5) en comparant les amplitudes des signaux en quadrature déphasés générés sur les électrodes du mode de détection (6, 7), la sortie de l'amplificateur de sommation (14) étant modulée par un signal de sortie de canal du mode d'entraînement (16) et passant par un filtre passe-bas (17) ;
• un démodulateur (15) adapté pour démoduler la sortie de l'amplificateur de sommation (14) dans lequel le filtre passe-bas (17) est adapté pour donner une mesure de l'accélération statique agissant sur le cadre de détection mobile (5), la sortie du filtre passe-bas (17) étant envoyée à un étage de contrôleur (18) ;
• dans lequel l'étage de contrôleur (18) est adapté pour générer une tension de rétroaction positive (21) pour maintenir le cadre de détection mobile (5) du gyroscope MEMS (1) stationnaire indépendamment d'une force d'accélération externe ;
• un tampon (19) adapté pour recevoir la sortie de l'étage de contrôleur (18) et pour donner des informations sur l'amplitude de la force d'accélération ; et
• un amplificateur inverseur (20) adapté pour inverser la tension de rétroaction positive (21) avant que ladite tension de rétroaction négative inversée (22) ne soit envoyée aux électrodes du mode de détection (6, 7).

2. Gyroscope MEMS selon la revendication 1 dans lequel les tensions de rétroaction (21, 22) sont envoyées de manière différentielle aux entrées non inversées des préamplificateurs en mode détection (12, 13) avant d'être envoyées aux électrodes en mode détection (6, 7).

3. Gyroscope MEMS selon la revendication 2 configuré de telle sorte que tout changement de tension dans les entrées non inversées des préamplificateurs du mode de détection (12, 13) altère les tensions en courant continue sur les électrodes différentielles du mode de détection (6, 7).
